# EUROPÄISCHE PATENTSCHRIFT

(11) **EP 3 640 625 B1**
(45) Veröffentlichungstag und Bekanntmachung des Hinweises auf die Patenterteilung: **28.08.2024**
(21) Anmeldenummer: 19202201.0
(22) Anmeldetag: 09.10.2019
(51) Int. Cl.: G01N 15/06, G01N 1/22, G01N 15/00

(54) **PARTIKELVERTEILVORRICHTUNG**
PARTICLE DISTRIBUTION DEVICE
DISPOSITIF DE DISTRIBUTION DES PARTICULES

(30) Priorität: 16.10.2018 DE 102018125601
(43) Veröffentlichungstag der Anmeldung: 22.04.2020
(73) Patentinhaber: CleanControlling GmbH, 78576 Emmingen-Liptingen (DE)
(72) Erfinder: BURGER, Volker, 78576 Emmingen-Liptingen (DE)
(74) Vertreter: Patent- und Rechtsanwälte Behrmann Wagner PartG mbB

(56) Entgegenhaltungen:
- DE-U1- 202016 106 164
- US-A1- 2013 220 371
- US-A1- 2015 211 976

## Beschreibung

Die vorliegende Erfindung betrifft eine Partikelverteilvorrichtung zum gleichmäßig verteilten Anordnen von auf Analysefiltermitteln abgelagerten Schmutzpartikeln nach dem Oberbegriff des Patentanspruchs 1.

Aus dem gattungsbildenden Stand der Technik sind Partikelverteilvorrichtungen nach dem Oberbegriff des Patentanspruchs 1 allgemein bekannt. Die bekannten Partikelverteilvorrichtungen werden im Rahmen von Laborarbeiten zur Aufbereitung von auf einer oberen Stirnseite eine Partikelaufnahmefläche mit darauf abgelagerten Schmutzpartikeln aufweisenden Analysefiltermitteln genutzt, wobei mittels der Analysefiltermittel zuvor die Schmutzpartikel aus einem Saugluftvolumenstrom herausgefiltert wurden.

Für Analyse- und Dokumentationszwecke und/oder zum Nachweis einer technischen Sauberkeit beispielsweise von einer Produktionsstätte und/oder einer Montagelinie müssen vom Hersteller und/oder Zulieferer Grenzwerte für die Anzahl von auf Bauteilen und vorgefertigten Montageeinheiten abgelagerten Schmutzpartikeln eingehalten werden. Neben der Anzahl der Schmutzpartikel werden hierbei auch die Größe und/oder die Form der Schmutzpartikel mittels optischen Analysemitteln, beispielsweise ausgebildet als Mikroskop und/oder durch digitale Bildverarbeitungsprogramme, erfasst. Aus diesem Grund werden die Bauteile und/oder die Montageeinheiten der Produktionsstätte stichprobenartig oder gänzlich in einem vorgesehenen Reinigungsschritt durch eine spezielle Saugvorrichtung gereinigt, wobei sämtliche lösbaren Schmutzpartikel durch den erzeugten Saugluftvolumenstrom von den Außenseiten aufgesaugt werden, wobei die Schmutzpartikel dann durch eine Partikelaufnahmefläche aufweisende Analysefiltermittel aus dem Saugluftvolumenstrom herausgefiltert werden und somit mittels der optischen Analysemittel analysiert und ausgewertet werden können. Nachteilig für die Bestimmung der Anzahl sowie der Form der Schmutzpartikel bei der nachgelagerte optische Analyse sind die sich im Randbereich und/oder in den Ecken der Analysefiltermittel ausbildenden Anhäufungen der Schmutzpartikel. Für die optische Auswertung ist es allerdings erforderlich, dass die Schmutzpartikel möglichst einzeln und gleichmäßig verteilt auf der Partikelaufnahmefläche der Analysefiltermittel angeordnet sind.

Erfahrungsgemäß kann dies durch das Aufschwimmen der Schmutzpartikel mittels eines zusätzlichen Arbeitsschritts erzielt werden. Hierfür werden die die Schmutzpartikel aufweisenden Analysefiltermittel, umgeben von Wandmitteln auf einer Trägereinheit angeordnet. Die Trägereinheit sowie die Wandmittel bilden eine zur Aufnahme von einer Flüssigkeit ausgebildete Aufnahmewanne aus. Durch ein eine Flüssigkeit aufnehmendes Flüssigkeitsreservoir umfassende Flutmittel werden dann die von der Aufnahmewanne aufgenommenen Analysefiltermittel vollständig mit der Flüssigkeit überschwemmt, um die Schmutzpartikel von der Partikelaufnahmefläche zu lösen, da diese auf der Flüssigkeitsoberfläche der die Aufnahmewanne flutenden Flüssigkeit aufschwimmen.

Üblicherweise erfolgt das Überschwemmen der Analysefiltermittel zum Aufschwimmen der Schmutzpartikel durch entsprechend geschultes Laborpersonal durch einen manuellen Arbeitsschritt mit entsprechendem Zeitaufwand.

Nach dem vollständigen Überschwemmen der Analysefiltermittel wird die Flüssigkeit durch vorgesehene Flüssigkeitsentnahmemittel wieder aus der Aufnahmewanne abgeleitet, wobei die Flüssigkeit die Analysefiltermittel zumindest abschnittsweise durchströmt. Erreicht der sinkende Flüssigkeitspegel das Niveau der Partikelaufnahmefläche der Analysefiltermittel, setzen sich die aufgeschwemmten Schmutzpartikel wieder dort fest, wobei die verteilte Anordnung der Schmutzpartikel erhalten bleibt. Dies ermöglicht dann in einem nachgelagerten Arbeitsschritt die optische Analyse. Nachteilig bei diesem Vorgehen ist der Zeitaufwand für den Aufbau sowie das Durchführen des Aufschwimmvorgangs. Ferner werden eine Vielzahl von unterschiedlichen Komponenten benötigt, die dann im Rahmen von sonst üblichen Laborarbeiten auch anderweitig eingesetzt werden, was für entsprechenden zusätzlichen Zeitaufwand sorgt, um die Funktionskomponenten mehrfach zusammen zu suchen.

Ferner ist aus dem Stand der Technik auch eine Reinigungsvorrichtung für Werkstücke zum Abspülen von Schmutzpartikeln etwa aus der US 2013/0220371 A1 sowie der US 2015/0211976 A1 bekannt. Weiter ist aus der DE 20 2016 106 164 U1 eine Partikelsammelvorrichtung mit einem Fliehkraftabscheider bekannt.

Ausgehend von dem vorgenannten Stand der Technik ist es Aufgabe der vorliegenden Erfindung, eine gattungsgemäße Partikelverteilvorrichtung zu optimieren, um neben einem geringeren Zweitaufwand für das Aufschwimmen von auf einer Partikelaufnahmefläche abgelagerten Schmutzpartikeln auch zusätzlich eine bessere Reproduzierbarkeit des Aufschwimmvorgangs zu ermöglichen, wobei auch ungeschultes Personal einsetzbar sein soll. Ferner soll die Partikelverteilvorrichtung möglichst klein und kompakt ausgebildet sein.

Die Aufgabe wird durch eine Partikelverteilvorrichtung mit den Merkmalen des Patentanspruchs 1 gelöst; vorteilhafte Weiterbildungen der Erfindung sind in den Unteransprüchen beschrieben. Zusätzlich Schutz im Rahmen der Erfindung wird beansprucht für ein System zur optischen Analyse von Schmutzpartikeln umfassenden Analysefiltermitteln, welches eine erfindungsgemäße Partikelverteilvorrichtung umfasst.

In erfindungsgemäß vorteilhafter Weise wird zunächst im Rahmen der Erfindung Abstand genommen von den im Stand der Technik skizzierten manuellen Arbeitsschritten, um mittels separaten Einzelkomponenten, wie etwa einer Laborspritzflasche, das Überschwemmen und wieder Ableiten der die Schmutzpartikel aufnehmenden Analysefiltermittel zu realisieren.

Die vorliegende Erfindung sieht hierfür ein Flüssigkeitsreservoir umfassende Flutmittel vor, die dazu ausgebildet und eingerichtet sind, in einem Flutbetriebsmodus zumindest kurzzeitig die von der Aufnahmewanne aufgenommenen Analysefiltermittel vollständig zu überschwemmen, wodurch die auf der Partikelaufnahmefläche, insbesondere gehäuft und/oder inhomogen, abgelagerten Schmutzpartikel aufschwimmen und sich hierbei homogen und einzeln auf der Flüssigkeitsoberfläche verteilen. Zur Ausbildung der Aufnahmewanne ist eine Trägereinheit vorgesehen, aus der, insbesondere monolithisch oder einstückig, die Analysefiltermittel in einer Hochrichtung vollständig überragende Wandmittel herausgebildet sind. Ferner umfasst die erfindungsgemäße Partikelverteilvorrichtung auch eine Auffangeinheit oder Abgussmittel umfassende Flüssigkeitsentnahmemittel, die dazu ausgebildet sind, die Flüssigkeit aus der Aufnahmewanne abzuleiten, derartig, dass die Flüssigkeit die Analysefiltermittel wenigstens abschnittsweise durchströmt, wobei sich bei dem sinkenden Flüssigkeitspegel in der Aufnahmewanne, beim Erreichen des Niveaus der Partikelaufnahmefläche, die aufgeschwimmten Schmutzpartikel auf der Partikelaufnahmefläche der Analysefiltermittel festsetzen, wobei die Position der Schmutzpartikel in Bezug auf die Längs- und Quererstreckung der Partikelaufnahmefläche erhalten bleibt. In erfindungsgemäß vorteilhafter Weise sind diese einzelnen Komponenten und/oder Funktionseinheiten in einem gemeinsamen Umgehäuse oder einer gemeinsamen Moduleinheit angeordnet. Mit anderen Worten umfasst die erfindungsgemäße Partikelverteilvorrichtung in einem gemeinsamen Umgehäuse oder einer gemeinsamen Moduleinheit: eine Trägereinheit, die zur Aufnahme von Schmutzpartikeln aufweisenden Analysefiltermitteln ausgebildet ist, Wandmittel, die zum Ausbilden einer Aufnahmewanne mit der Trägereinheit ausgebildet sind, Flutmittel zum Zuleiten der Flüssigkeit in die Aufnahmewanne sowie Flüssigkeitsentnahmemittel, um die Flüssigkeit wieder aus der Aufnahmewanne abzuleiten. Im Gegensatz zum Stand der Technik sind hierbei diese voneinander unabhängigen Funktionseinheiten eben nicht durch separate Einzelkomponenten ausgebildet.

In einer Weiterbildung der erfindungsgemäßen Partikelverteilvorrichtung sind das Flüssigkeitsreservoir der Flutmittel und die Auffangeinheit der Flüssigkeitsentnahmemittel als identisch gestaltete Baugruppe ausgebildet, wodurch die beiden Baugruppen (Tanks) miteinander austauschbar sind. Somit kann die nach einem mit der entsprechend weitergebildeten erfindungsgemäßen Partikelverteilvorrichtung durchgeführten Aufschwimmvorgang in der Auffangeinheit gesammelte Flüssigkeit den Flutmitteln für einen nachfolgenden Aufschwimmvorgang zugeführt werden, in dem das leere, also keine Flüssigkeit enthaltene Flüssigkeitsreservoir der Flutmittel mit der vollen, also die gesamte für einen Aufschwimmvorgang benötigte Flüssigkeit aufweisende Auffangeinheit ausgetauscht wird. In diesem Zusammenhang ist es besonders vorteilhaft, wenn zum Fluten der Analysefiltermittel die Schwerkraft genutzt wird und die Flüssigkeit somit selbstständig von dem Flüssigkeitsreservoir in die Aufnahmewanne geleitet wird. Ferner ist es dann weiterbildend auch vorteilhaft, wenn auch zum Ableiten der Flüssigkeit von der Aufnahmewanne in die Auffangeinheit einzig die Schwerkraft genutzt wird und somit weder für das Zuführen noch für das Ableiten der Flüssigkeit Pumpmittel benötigt werden, was neben geringen Bauteilkosten auch zu einem kleineren Gehäusemaß führt.

Ferner ist es ergänzend oder alternativ vorgesehen, dass das Flüssigkeitsreservoir und die Auffangeinheit flüssigkeitsleitend miteinander verbunden sind oder, dass das Flüssigkeitsreservoir der Auffangeinheit entspricht, also als beide Tanks als ein einzelnes Bauteil (gemeinsamer Tank) ausgebildet sind. Bei beiden bevorzugten Realisierungsformen entfällt der manuelle Arbeitsschritt, um die beiden Flüssigkeitsbehälter (das Flüssigkeitsreservoir und die Auffangeinheit) auszutauschen. Vorteilhaft bei der Ein-Tank-Lösung ist die potentiell größere Reduzierung des Gehäusemaßes der entsprechend weitergebildeten erfindungsgemäßen Partikelverteilvorrichtung.

Weiterbildend ist es vorgesehen, dass die Trägereinheit insbesondere als kaskadierbare Module oder durch eine Mehrzahl an miteinander verbind- oder koppelbare Einheiten ausgebildet ist, um somit wenigstens zwei Analysefiltermittel voneinander beabstandet zu halten, wobei die Partikelaufnahmeflächen so ausgerichtet werden, dass die Partikelaufnahmeflächen vollständig mit der Flüssigkeit überschwemmbar sind. Vorteilhaft ermöglicht dies beide Analysefiltermittel zum Neuanordnen der Schmutzpartikel mit der Flüssigkeit oder dem Kaltreiniger in dem erfindungsgemäßen Flutbetriebsmodus mittels der Flutmittel zu überschwemmen, um somit die Schmutzpartikel auf beiden Partikelaufnahmeflächen neu anzuordnen.

Ferner hat es sich auch als vorteilhaft herausgestellt, wenn die Trägereinheit und die Wandmittel zur Aufnahme von eine runde oder ovale Partikelaufnahmefläche aufweisenden Analysefiltermitteln ausgebildet sind und somit auch die ausgebildete Aufnahmewanne eine runde oder ovale Grundfläche aufweist. Hierbei ist es besonders vorteilhaft, dass die verstärkte Festsetzung von Schmutzpartikeln in den Ecken der Partikelaufnahmefläche der Analysefiltermittel beim Aufschwimmvorgang vollständig verhindert werden kann.

Weiterbildend hat es sich als besonders vorteilhaft herausgestellt, wenn die Analysefiltermittel aus einem Gewebematerial realisiert sind und/oder eine Dicke von mindestens 0,5mm, bevorzugt von mindestens 0,8mm oder weiter bevorzugt von mindestens 1,5mm aufweisen. So haben Versuche in der Praxis gezeigt, dass eine solche Ausgestaltung der Analysefiltermittel besonders vorteilhaft ist, da sich hierbei zum Einen die Schmutzpartikel gut aus dem Saugluftvolumenstrom herausfiltern lassen und zum Anderen die Analysefiltermittel auch gut von der Flüssigkeit durchströmt werden können, wobei die aufgeschwimmten Schmutzpartikel auf der Partikelaufnahmefläche zurückbleiben.

Erfindungsgemäß umfassen die Flüssigkeitsentnahmemittel eine Vakuumpumpe oder eine Wasserstrahlpumpe, um die in der Aufnahmewanne durch die Flutmittel zugeleitete Flüssigkeit abzusaugen, wobei beim Absaugen die Flüssigkeit die Analysefiltermittel insbesondere vollständig durchströmt, damit die Schmutzpartikel auf der an der Stirnseite der Analysefiltermittel angeordneten Partikelaufnahmefläche zurückbleiben. Ergänzend zu der bereits oben erwähnten bevorzugten Ausführungsform ist es weiter bevorzugt, wenn die Wasserstrahlpumpe oder die Vakuumpumpe sowohl zum Fluten der Aufnahmewanne von den Flutm itteln, als auch zum Ableiten der Flüssigkeit aus der Aufnahmewanne von den Flüssigkeitsentnahmemitteln eingesetzt wird.

Erfindungsgemäß ist es vorgesehen, dass die Flüssigkeitsentnahmemittel eine Ansteuereinheit umfassen. Vorteilhaft ist in diesem Zusammenhang die Ansteuereinheit so ausgebildet, dass zunächst in einer nur wenige Sekunden dauernden Initialisierungsphase etwas Flüssigkeit oder Kaltreiniger aus der Aufnahmewanne abgeleitet wird. Anschließend wird von der Ansteuereinheit eine Partikeltrennphase aktiviert, wobei, insbesondere durch einen invertierten Pumpbetrieb, Luftblasen zum Durchmischen der Flüssigkeit und zum Aufwirbeln der Schmutzpartikel in der Aufnahmewanne erzeugt bzw. zugeführt werden. Dies ermöglicht es vorteilhaft, dass verklebte Schmutzpartikel (Partikelklumpen) voneinander lösbar sind. Besonders vorteilhaft zeigt sich dieser Effekt nachdem bereits ein Teil der Flüssigkeit in der Initialisierungsphase abgepumpt wurde. Anschließend wird dann die vollständige Flüssigkeit aus der Aufnahmewanne in einer Absaugphase abgeleitet.

Zudem umfassen die Flutmittel weiterbildend eine Düse, die bevorzugt um eine Rotationsachse bewegbar ist oder zum Erzeugen eines rotierenden Flüssigkeitsstrahls ausgebildet ist, um beim Einleiten der Flüssigkeit in die Aufnahmewanne die Wandmittel abzuspritzen und somit dort festgesetzte Schmutzpartikel abzuwaschen. Gerade im Zusammenhang mit dem später noch näher beschriebenen Nachspülbetriebsmodus hat sich diese Ausgestaltung als besonders vorteilhaft erwiesen, wenn zumindest der Bereich der Wandmittel bis zum maximalen Füllstand der Flüssigkeit durch den rotierenden Flüssigkeitsstrahl abgefahren wird.

Weiterbildend ist es zusätzlich vorgesehen, dass die Flutmittel zum Überschwemmen der Analysefiltermittel zur Abgabe einer Flüssigkeitsmenge von maximal 150ml, maximal 100ml, weiter bevorzugt maximal 50ml, besonders bevorzugt maximal 30ml ausgebildet sind, wodurch sich die Flüssigkeitsmenge zur Durchführung eines Aufschwimmvorgangs auf eine Mindestmenge reduzieren lässt. Ferner ermöglicht dies eine gute Reproduzierbarkeit eines mittels einer derart ausgebildeten Partikelverteilvorrichtung durchgeführten Aufschwimmvorgangs, da beim Fluten der Analysefiltermittel durch Zuleiten der Flüssigkeit in die Aufnahmewanne stets die konstante Flüssigkeitsmenge genutzt wird.

Besonders bevorzugt ist es auch, wenn die Wandmittel und/oder die Trägereinheit aus einem Kunststoffmaterial ausgebildet und hergestellt sind. Hierbei ist es besonders bevorzugt, wenn das Kunststoffmaterial als Elastomermaterial ausgebildet ist. Ferner ist eine transparente Ausbildung der die Aufnahmewanne ausbildenden Wandmittel sowie der Trägereinheit vorteilhaft, da hierdurch die optische Analyse mit den Analysefiltermitteln auch in der Aufnahmewanne vorteilhaft ermöglicht wird, was zusätzlichen Schutz vor einer nachträglichen Kontaminierung der Analysefiltermittel mit zusätzlichen Schmutzpartikeln oder einer Beeinflussung bzw. Verschiebung der auf der Partikelaufnahmefläche positionierten Schmutzpartikel bietet.

Ferner ist es in diesem Zusammenhang weiterbildend besonders vorteilhaft, wenn die Trägereinheit zur Aufnahme der Analysefiltermittel mehrteilig ausgebildet ist, wobei ein erster Teil der Trägereinheit mit den Analysefiltermitteln in die Partikelverteilvorrichtung einführbar ist, wobei mit einem, insbesondere nicht tragbaren zweiten Teil der Trägereinheit und/oder mit den Wandmittel die Aufnahmewanne ausbildbar ist.

In einer Weiterbildung der Erfindung ist es vorteilhaft vorgesehen, dass die Grundfläche bzw. die Unterseite der Trägereinheit und/oder wenigstens der Teilbereich der Trägereinheit, der zum Aufnehmen der Analysefiltermittel ausgebildet ist, eine optisch sichtbare Färbung aufweist, derartig, dass die Trägereinheit sich farblich von den Analysefiltermitteln abhebt. Ferner ist auch eine Farbgestaltung der Trägereinheit oder der Wandmittel vorteilhaft, bei der zusätzliche Schmutzpartikel sichtbar werden, um eine Kontaminierung von zu untersuchenden Analysefiltermitteln mit den zusätzlichen Schmutzpartikeln zu vermeiden.

In diesem Zusammenhang soll es unteranderem verhindert werden, dass es durch bei einem zeitlich vorgelagerten (früheren) Aufschwimmvorgang an den Wandmitteln festgesetzte Schmutzpartikel zu einer Beeinträchtigung (Kontaminierung) der Analysefiltermittel mit den zusätzlichen Schmutzpartikeln bei einem nachträglich durchgeführten (späteren) Aufschwimmvorgangs kommt.

In einer Weiterbildung der Erfindung ist es vorteilhaft vorgesehen, dass die Flutmittel neben dem Flutbetriebsmodus zum Überfluten der in der Aufnahmewanne angeordneten Analysefiltermittel einen Nachspülbetriebsmodus aufweisen, wobei der Nachspülbetriebsmodus dazu eingerichtet und ausgebildet ist, dass während dem Ableiten der Flüssigkeit aus der Aufnahmewanne durch die Flüssigkeitsentnahmemittel mit einem Ableitfluidvolumenstrom - und somit einem absinkenden Flüssigkeitspegel in der Aufnahmewanne - die Wandmittel durch einen Nachspülfluidvolumenstrom derart benässt und/oder abgespült werden, dass sich an den Wandmitteln keine Schmutzpartikel festsetzen können bzw. dass die an den Wandmitteln festgesetzte Schmutzpartikel wieder gelöst werden. Anders ausgedrückt, soll durch den Nachspülbetriebsmodus verhindert werden, dass Schmutzpartikel an den Wandmitteln zurückbleiben, um eine negative Beeinflussung bei der optischen Analyse zur Bestimmung der technischen Sauberkeit zu vermeiden.

Auch im Rahmen der Erfindung ist als eine Weiterbildung der erfindungsgemäßen Partikelverteilvorrichtung vorgesehen, dass die Partikelverteilvorrichtung Steuermittel umfasst, die dazu eingerichtet und ausgebildet sind, die Flutmittel sowie die Flüssigkeitsentnahmemittel automatisch, also zu vorkonfigurierbaren Relativzeitpunkten, anzusteuern. Hierbei ist es vorteilhaft und weiterbildend vorgesehen, dass ein Benutzerbefehl, insbesondere ausgelöst und/oder erzeugt durch eine Bedienperson (Laborpersonal oder Analysepersonal), mittels einer am Umgehäuse oder der gemeinsamen Moduleinheit vorgesehenen und angeordneten Tast- und/oder Bedieneinheit, die Steuermittel derart ansteuert, dass die Flüssigkeit automatisiert, insbesondere in einer (vom Laborpersonal oder Analysepersonal) festlegbaren Menge und mit einer festlegbaren Geschwindigkeit und/oder in Abhängigkeit der Größe und/oder der Dicke der von der Aufnahmewanne aufgenommenen Analysefiltermittel in die Aufnahmewanne zuführbar ist, um die dort aufgenommenen Analysefiltermittel zu fluten. Ferner sollen nach dem vollständigen Überschwemmen der Analysefiltermittel die Flüssigkeitsableitmittel von den Steuermitteln automatisiert aktivierbar sein, um die Flüssigkeit wieder aus der Aufnahmewanne abzuleiten, wobei die Flüssigkeit beim Ableiten die Analysefiltermittel so durchströmt, dass sich die Schmutzpartikel auf der Partikelaufnahmefläche gleichmäßig verteilt festsetzen, sobald der Flüssigkeitspegel entsprechend abgefallen ist.

Weiterbildend ist es hierbei vorgesehen, dass während dem Ableiten der Flüssigkeit die Steuermittel den Nachspülbetriebsmodus aktivieren, um mit dem Nachspülfluidvolumenstrom die Wandmittel derart zu benässen, dass sich dort keine Schmutzpartikel festsetzen können. Dies ermöglicht eine besonders vorteilhafte und komfortable Benutzung der Partikelverteilvorrichtung, da sämtliche durchgeführten Aufschwimmvorgänge gleich ablaufen. Ferner vermeidet dies beim Durchführen eines Aufschwimmvorgangs eine Kontaminierung der Analysefiltermittel mit zusätzlichen, an den Wandmitteln bei einem früheren Aufschwimmvorgang festgesetzten Schmutzpartikeln.

Zudem ist die erfindungsgemäße Partikelverteilvorrichtung bevorzugt dahingehend ausgebildet, dass die Umgebungsluft ausschließlich durch einen Luftfilter in die Partikelverteilvorrichtung eingeführt wird. Dies verhindert, insbesondere in der weiterbildend vorgesehenen Partikeltrennphase, eine Verunreinigung der Partikelaufnahmefläche mit zusätzlichen Schmutzpartikeln aus der Umgebungsluft.

Schließlich wird im Rahmen der Anmeldung auch Schutz für ein System beansprucht, das eine erfindungsgemäße Partikelverteilvorrichtung umfasst, sowie optische Analysemittel, um die auf der Partikelaufnahmefläche angeordneten Schmutzpartikel zu erfassen, um somit die technische Sauberkeit zu bestimmen. Bei den optischen Analysemittel kann es sich um ein Mikroskop oder ein digitales Bildbearbeitungsprogramm handeln, das mit einer ein objektiv aufweisenden Digitalkamera in Wirkverbindung steht. Hierbei ermöglicht das erfindungsgemäße System, die mehrfache optische Analyse der Partikelaufnahmefläche, wobei zwischen den einzelnen Messungen ein Aufschwimmvorgang durchgeführt wird, um eine Neuanordnung der Schmutzpartikel zu realisieren. Durch das Vergleichen der einzelnen Messergebnisse kann somit vorteilhaft eine Kontrolle der einzelnen Messungen umgesetzt werden, um Fehlmessungen frühzeitig zu erkennen oder ein kritisches Messergebnis zu bestätigen.

Im Ergebnis erreicht die vorliegende Erfindung in überraschend einfacher, kompakter und kostengünstig zu realisierender Weise eine wirksame Möglichkeit, um auf Analysefiltermitteln angeordnete Schmutzpartikel neu homogen und einzeln anzuordnen und/oder zu positionieren, um diese anschließend mittels einer nachgelagerten optischen Analyse auszuwerten. Damit eignet sich die vorliegende Erfindung in herausragender Weise für den Betrieb in einem Messlabor und/oder einer Produktionsstätte, zur optischen Auswertung von Schmutzpartikeln, um die technische Sauberkeit eines Bauteils und/oder einer Montageeinheit zu bestimmen.

Weitere Vorteile, Merkmale und Einzelheiten der Erfindung ergeben sich aus der nachfolgenden Beschreibung bevorzugter Ausführungsbeispiele sowie anhand der Zeichnungen, diese zeigen in:
- Fig. 1:: eine schematische Darstellung einer bevorzugten Ausführungsform der Partikelverteilvorrichtung, durch die inhomogen verteilte Schmutzpartikel auf einer Partikelaufnahmefläche von Analysefiltermitteln durch einen Aufschwimmvorgang homogen anordnenbar sind in
- Fig. 2:: eine schematische Darstellung einer weiteren bevorzugten Ausführungsform der erfindungsgemäßen Partikelverteilvorrichtung, wobei das Wasserreservoir der Flutmittel der Auffangeinheit der Flüssigkeitsentnahmemittel entspricht und in
- Fig. 3:: eine schematische Darstellung einer bevorzugten Ausgestaltung der Trägereinheit, die zur Aufnahme von zwei Analysefiltermitteln ausgebildet ist.

In den Figuren sind gleiche Elemente und Elemente mit der gleichen Funktion mit den gleichen Bezugszeichen gekennzeichnet.

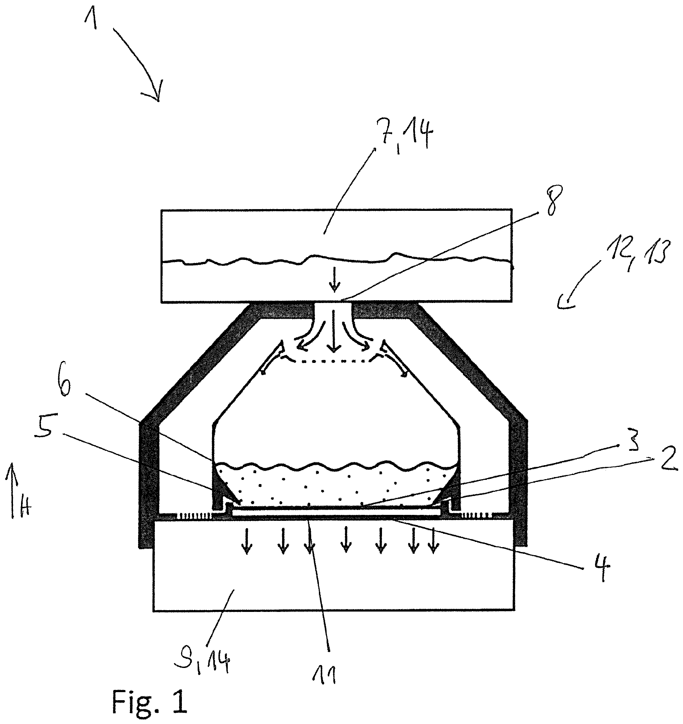

Die Fig. 1 zeigt eine schematische Darstellung einer erfindungsgemäßen Partikelverteilvorrichtung 1 zum gleichmäßig verteilten Anordnen von auf Analysefiltermittel 2 abgelagerten Schmutzpartikeln. Hierfür umfasst die in der Fig. 1 dargestellte Partikelverteilvorrichtung 1 eine Trägereinheit 4, die zum Aufnehmen und/oder Halten der Analysefiltermittel 2 ausgebildet ist, wobei die auf der Oberseite der Analysefiltermittel 2 angeordnete und die Schmutzpartikel aufnehmende Partikelaufnahmefläche 3 horizontal ausgerichtet ist. Ferner umfasst die erfindungsgemäße Partikelverteilvorrichtung 1 Wandmittel 5, die die aufgenommenen Analysefiltermittel 2 umfangsseitig begrenzen und die die Partikelaufnahmefläche 3 (sowie die Analysefiltermittel 2) in einer sich vertikal zur Partikelaufnahmefläche 3 erstreckenden Hochrichtung H vollständig überragen, zum Ausbilden einer Aufnahmewanne 6 für eine Flüssigkeit und zum vollständigen Überfluten der von der Aufnahmewanne 6 aufgenommenen Analysefiltermittel 2. Ferner weist die erfindungsgemäße Partikelverteilvorrichtung 1 Flutmittel 8 auf, die zur Bevorratung der Flüssigkeit ein Flüssigkeitsreservoir 7 umfassen. Die Flutmittel 8 sind dazu ausgebildet und eingerichtet, die in dem Flüssigkeitsreservoir 7 gespeicherte Flüssigkeit in die Aufnahmewanne 6 zu leiten, um die auf der Trägereinheit 4 angeordneten Analysefiltermittel 2 mit der Flüssigkeit vollständig zu überschwemmen, wobei die auf der Partikelaufnahmefläche 3 lösbar festgesetzten Schmutzpartikel durch die zugeleitete Flüssigkeit von der Partikelaufnahmefläche 3 gelöst werden und aufgrund der Oberflächenspannung der Flüssigkeit auf der Flüssigkeitsoberfläche aufschwimmen, wobei sich diese homogen und einzeln auf der Flüssigkeitsoberfläche verteilen.

Ferner umfasst die in der Fig. 1 dargestellte erfindungsgemäße Partikelverteilvorrichtung 1 Flüssigkeitsentnahmemittel 11, die eine Auffangeinheit 9 oder nicht grafisch in der Fig. 1 dargestellte Abgussmittel umfassen, zum Ableiten der in der Aufnahmewanne 6 aufgestauten Flüssigkeit, wobei die Flüssigkeit zum Rückhalten der aufgeschwimmten Schmutzpartikel die Analysemittel 2 beim Ableiten durchströmt, damit sich die Schmutzpartikel wieder auf der Partikelaufnahmefläche 3 der Analysefiltermittel 2 festsetzen. Durch das Aufschwimmen sind die Schmutzpartikel zunächst homogen auf der Flüssigkeitsoberfläche verteilt und setzen sich somit bei sinkendem Flüssigkeitspegel entsprechend einzeln auf der Partikelaufnahmefläche 3 der Analysefiltermittel 2 ab, sobald der Flüssigkeitspegel wieder entsprechend stark abgesunken ist und die Oberseite der Analysefiltermittel 2, also die Partikelaufnahmefläche 3, die Flüssigkeitsoberfläche entlang der Hochrichtung H überragt.

Somit können die Schmutzpartikel in einem nachgelagerten Verfahrensschritt durch nicht in der Fig. 1 grafisch dargestellte optische Analyse- und/oder Auswertemittel 10 erfasst und analysiert werden, um die Anzahl sowie die Größe der auf der Partikelaufnahmefläche 3 angeordneten Schmutzpartikeln zu erfassen und die technische Sauberkeit einer Produktionsstätte zu bestimmen.

Erfindungsgemäß ist es vorgesehen, dass die zur Aufnahme der Analysefiltermittel 2 ausgebildete Trägereinheit 4, die Wandmittel 5, die Flutmittel 8 sowie die Flüssigkeitsentnahmemittel 11 in einem gemeinsamen Umgehäuse 12 oder einer gemeinsamen Moduleinheit 13 angeordnet sind.

Besonders vorteilhaft bei der in der Fig. 1 dargestellten Partikelverteilvorrichtung 1 ist die Ausbildung der Auffangeinheit 9 sowie des Flüssigkeitsreservoirs 7 als identische Baugruppe 14, wodurch sich beide Bauteile beliebig austauschen lassen. Die ermöglicht es vorteilhaft, dass nach einem vollständigen Aufschwimmvorgang mit der in der Fig. 1 dargestellten Partikelverteilvorrichtung 1 die Flüssigkeit in der Auffangeinheit 9 durch Austausch der Auffangeinheit 9 mit dem Flüssigkeitsreservoir 7 von der in Bezug auf die Hochrichtung tieferen Position in die höhere Position bringbar ist, weshalb es vorteilhaft möglich wird, dass keine Pumpmittel benötigt werden, da zum Zu- und Ableiten der Flüssigkeit lediglich die Schwerkraft nutzbar ist.

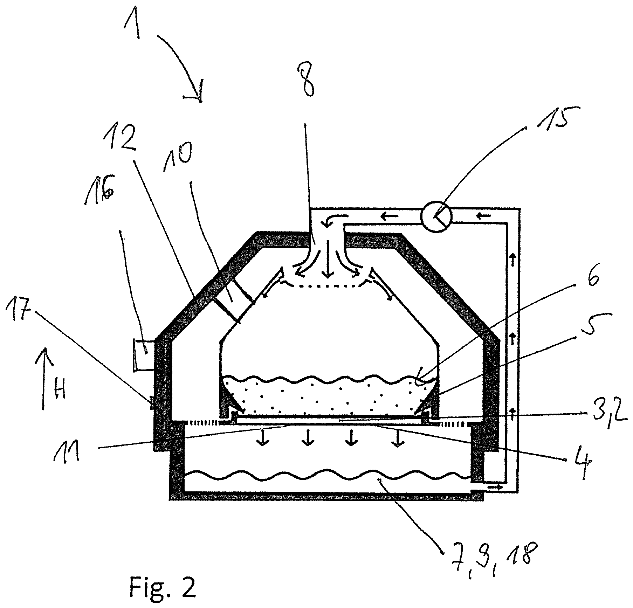

Eine Weiterbildung der aus der Fig. 1 bekannten erfindungsgemäßen Partikelverteilvorrichtung 1 ist in Fig. 2 dargestellt. Auch die in der Fig. 2 gezeigte Partikelverteilvorrichtung 1 umfasst eine Trägereinheit 4 zum Aufnehmen und Ausrichten der die Partikelaufnahmefläche 3 auf einer oberen Stirnseite umfassenden Analysefiltermittel 2, wobei die Partikelaufnahmefläche 3 im aufgenommenen Zustand horizontal ausgerichtet ist und eine runde Grundform aufweist. Durch die die Analysefiltermittel 2 im aufgenommenen Zustand umfangsseitig begrenzende sowie die Partikelaufnahmefläche 3 in einer sich vertikal zur Partikelaufnahmefläche 3 erstreckenden Hochrichtung H diese überragende Wandmittel 5, wird zur Aufnahme der Flüssigkeit entsprechend der Fig. 1 eine Aufnahmewanne 6 ausgebildet, um die aufgenommenen Analysefiltermittel 2 zu überschwemmen damit die auf der Partikelaufnahmefläche 3 lösbar angeordneten Schmutzpartikel aufschwimmen. Im Unterschied zu der aus der Fig. 1 bekannten Ausführungsform der erfindungsgemäßen Partikelverteilvorrichtung 1 zeichnet sich die in der Fig. 2 dargestellte Ausführungsform der erfindungsgemäße Partikelverteilvorrichtung 1 dadurch aus, dass das Flüssigkeitsreservoir 7 sowie die Auffangeinheit 9 durch dieselbe Baueinheit ausgebildet sind. Die 1-Tank-Lösung erfordert allerdings Pumpmittel 15, die in der in der Fig. 2 dargestellten Ausführungsform durch eine Vakuumpumpe 15 ausgebildet sind. Durch die Vakuumpumpe 15 kann die Flüssigkeit aus dem gemeinsamen Tank 18 in die in Bezug auf die Hochrichtung H höher gelegene Aufnahmewanne 6 geleitet werden, um die dort angeordneten Analysefiltermittel 2 zu überschwemmen, wobei durch die vorgesehenen Flüssigkeitsentnahmemittel 11 die Flüssigkeit von der Aufnahmewanne 6 durch die Schwerkraft oder einen erzeugten Unterdruck wieder in den Tank 18 zurückfließt.

Die in der Fig. 2 dargestellten Partikelverteilvorrichtung 1 ermöglicht somit einen höheren Grad der Automatisierung, da es zum Start eines Aufschwimmvorgangs nicht erforderlich ist, dass die Flüssigkeit durch einen manuellen Arbeitsschritt (Austausch der beiden Behälter) in die Ausgangsposition gebracht werden muss.

Ferner umfasst die in der Fig. 2 gezeigte Partikelverteilvorrichtung 1 Steuermittel 16, die dazu ausgebildet und eingerichtet sind, als Reaktion auf einen Benutzerbefehl einen Aufschwimmvorgang zu starten, wobei zunächst die Flüssigkeit aus dem Flüssigkeitsreservoir 7 durch die Vakuumpumpe 15 in die Aufnahmewanne 6 geleitet wird, um die dort vorgesehenen Analysefiltermittel 2 zu überschwemmen. Nach dem vollständigen Überschwemmen der Analysefiltermittel 2 erfolgt das Ableiten der Flüssigkeit aus der Aufnahmewanne 6 durch die Flüssigkeitsentnahmemittel 11, weshalb der Flüssigkeitspegel in der Aufnahmewanne 6 wieder absinkt. Mit sinkendem Flüssigkeitspegel in der Aufnahmewanne 6 wird von den Flutmittel 8 ein Nachspülbetriebsmodus aktiviert, der so eingerichtet ist, dass die Wandmittel 5 mit Flüssigkeit derart benässt werden, dass sich dort beim sinkendem Flüssigkeitsstand keine Schmutzpartikel festsetzen können, da diese in die Flüssigkeit geschwemmt werden. Schließlich umfasst die Partikelverteilvorrichtung 1 zum Erzeugen des Benutzerbefehls eine Tast- und/oder Bedieneinheit 17, die an dem Umgehäuse 12 angeordnet ist und mittels der das Laborpersonal einen Aufschwimmvorgang zur Neuanordnung der Schmutzpartikel auslösen kann.

Besonders zweckmäßig ist es in diesem Zusammenhang auch, wenn die aus der Fig. 1 oder der Fig. 2 bekannte Partikelverteilvorrichtung im Rahmen eines optischen Analysesystems optische Analyse- und Auswertemittel 10 umfasst, die zum Auswerten und Erfassen der auf der Partikelaufnahmefläche 3 festgesetzten Schmutzpartikel ausgebildet sind. Ferner ermöglicht dies das Durchführen von Mehrfachmessungen, wobei zwischen den einzelnen Messungen ein Aufschwimmvorgang zur Neuanordnung der Schmutzpartikel durchführbar ist.

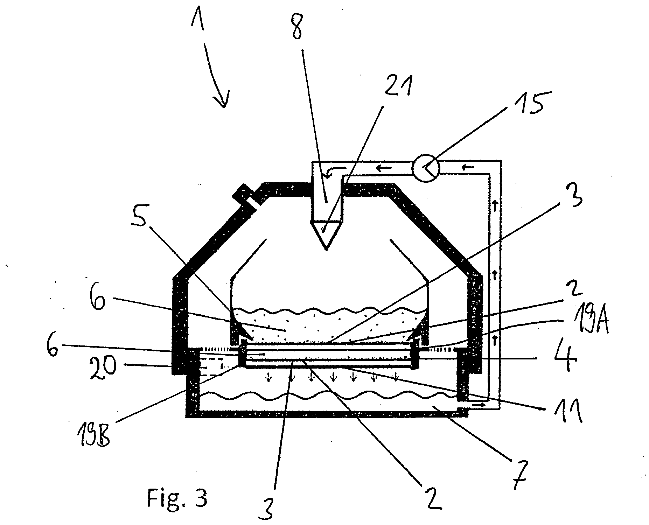

In der Fig. 3 ist eine weitere bevorzugte Ausgestaltung der Partikelverteilvorrichtung 1 wiedergegeben. Die dargestellte Partikelverteilvorrichtung 1 umfasst eine Trägereinheit 4, die durch zwei miteinander in Wirkverbindung stehende Einheiten 19A, 19B ausgebildet ist, wobei jede Einheit 19A, 19B Analysefiltermittel 2 mit jeweils einer Partikelaufnahmefläche 3 aufnimmt und ausrichtet. Durch die Ausgestaltung der miteinander gekoppelten Einheiten 19A, 19B der Trägereinheit 4 werden die beiden Partikelaufnahmeflächen 3 so angeordnet und ausgerichtet, dass durch die Flutmittel 8 beide Partikelaufnahmeflächen 3 mit der Flüssigkeit aus einem Flüssigkeitsreservoir 7 überschwemmbar sind. Hierbei wird die Aufnahmewanne 6 der in Bezug auf die Hochrichtung unteren Partikelaufnahmefläche 3 durch die untere Einheit 19B der Trägereinheit 4 ausgebildet.

Ferner umfasst die Partikelverteilvorrichtung 1 eine Düse 21 zum Zuführen der Flüssigkeit in die oberer Aufnahmewanne 6 der erfindungsgemäßen Partikelverteilvorrichtung 1, um die Partikelaufnahmefläche 3 der in Bezug auf die Hochrichtung oberen Einheit vollständig zu überschwemmen. Hierbei ist die Düse 21 so ausgestaltet, dass ein sich um 360° rotierender Flüssigkeitsstrahl entsteht und die Wandmittel 5 der oberen Aufnahmewanne 6 vollständig abgespritzt werden. Dies verhindert, insbesondere in der Nachspülphase nach einem Aufschwimmborgang, dass sich Schmutzpartikel an den Wandmitteln 5 festsetzen.

Ferner sind die Flüssigkeitsentnahmemittel 11 so ausgestaltet, dass beim Ableiten der Flüssigkeit nach dem vollständigen Überschwemmen der Partikelaufnahmeflächen 3 unterschiedliche Phasen aktiviert werden. Hierfür umfassen die in der Fig. 3 dargestellten Flüssigkeitsentnahmemittel 11 eine Ansteuereinheit 20, die in der Fig. 3 schematisch dargestellt ist. Mittels der Ansteuereinheit 20 wird eine Vakuumpumpe 15 zunächst für einige wenige Sekunden während einer Initialisierungsphase aktiviert, um die Analysefiltermittel 2 vollständig mit Flüssigkeit zu durchnässen und eine geringe Menge Flüssigkeit aus der oberen und unteren Aufnahmewanne 6 zu entnehmen. Anschließend wird von der Ansteuereinheit 20 eine Partikeltrennphase aktiviert, um durch das Zuführen von Umgebungsluft in die Flüssigkeit Luftblasen zu erzeugen. Dies führt zum Durchmischen der aufgeschwemmten Schmutzpartikel und trennt bzw. löst durch mehrere verklebte Schmutzpartikel ausgebildete Schmutzpartikelklumpen. Nach der Partikeltrennphase wird dann mittels der Ansteuereinheit 20 die normale Ableitphase aktiviert, um die Flüssigkeit vollständig zu entfernen.

Ferner umfasst die dargestellte Partikelverteilvorrichtung 1 auch einen Luftfilter 22, der beim Zuführen von Umgebungsluft, insbesondere während der Partikeltrennphase, das Verunreinigen mit zusätzlichen Schmutzpartikeln aus der Umgebungsluft verhindert. Hierfür umfasst der dargestellte Luftfilter 22 ein dichtporiges Gewebematerial.

### Bezugszeichenliste

- 1: Partikelverteilvorrichtung
- 2: Analysefiltermittel
- 3: Partikelaufnahmefläche
- 4: Trägereinheit
- 5: Wandmittel
- 6: Aufnahmewanne
- 7: Flüssigkeitsreservoir
- 8: Flutmittel
- 9: Auffangeinheit
- 10: optische Analyse- und/oder Auswertmittel
- 11: Flüssigkeitsentnahmemittel
- 12: Umgehäuse
- 13: Gemeinsame Moduleinheit
- 14: Identische Baugruppe
- 15: Vakuumpumpe
- 16: Steuermittel
- 17: Tast- und/oder Bedieneinheit
- 18: gemeinsamer Tank
- 19A,: obere Einheit
- 19B: untere Einheit
- 20: Ansteuereinheit
- 21: Düse

- H: Hochrichtung

## Patentansprüche

1. Partikelverteilvorrichtung (1) zum gleichmäßig verteilten Anordnen von auf Analysefiltermitteln (2) abgelagerten, insbesondere zuvor aus einem Fluidvolumenstrom herausgefilterten Schmutzpartikeln,
mit einer zur Aufnahme von eine obere Partikelaufnahmefläche (3) aufweisenden Analysefiltermitteln (2) ausgebildeten Trägereinheit (4) zum Aufnehmen und/oder Halten der Analysefiltermittel (2), wobei die Partikelaufnahmefläche (3) horizontal ausgerichtet ist,
mit, insbesondere monolithisch, aus der Trägereinheit (4) hervorgehenden, die Partikelaufnahmefläche (3) im aufgenommenen Zustand seitlich begrenzenden und in eine sich vertikal zur Partikelaufnahmefläche (3) erstreckenden Hochrichtung (H) diese überragenden Wandmitteln (5) zum Ausbilden einer Aufnahmewanne (6) für eine Flüssigkeit, insbesondere Wasser oder Kaltreiniger,
mit ein Flüssigkeitsreservoir (7) umfassenden Flutmitteln (8) zum wenigstens kurzzeitigen Überschwemmen der Analysefiltermittel (2) durch Fluten der Aufnahmewanne (6) mit der Flüssigkeit in einem Flutbetriebsmodus, um die auf der Partikelaufnahmefläche (3), insbesondere inhomogen, verteilten Schmutzpartikel aufzuschwimmen sowie
mit eine Auffangeinheit (9) oder Abgussmittel umfassenden Flüssigkeitsentnahmemitteln (11) zum Ableiten der in der Aufnahmewanne (6) aufgestauten Flüssigkeit, wobei die Flüssigkeit zum Rückhalten der Partikelaufnahmefläche (3) die Analysefiltermittel (2) durchströmt,
wobei die Trägereinheit (4), die Wandmittel (5), die Flutmittel (8), die Flüssigkeitsentnahmemittel (11) sowie die Analysefiltermittel (2) im aufgenommenen Zustand in einem gemeinsamen Umgehäuse (12) oder einer gemeinsamen Moduleinheit (13) angeordnet sind,
wobei die Flüssigkeitsentnahmemittel (11) eine Vakuumpumpe (15) oder eine Wasserstrahlpumpe zum Absaugen der in der Aufnahmewanne (6) vorgehaltenen Flüssigkeit umfassen, derartig, dass die Flüssigkeit beim Absaugen die Analysefiltermittel (2) durchströmen zum Rückhalten der Schmutzpartikel auf der Partikelaufnahmefläche (3),
**dadurch gekennzeichnet, dass**
die Flüssigkeitsentnahmemittel (11) eine Ansteuereinheit (20) aufweisen, wobei die Ansteuereinheit (20) dahingehend ausgebildet ist, dass nach einem kurzzeitigen Absaugen der Flüssigkeit in einer Initialisierungsphase eine Partikeltrennphase zum Erzeugen von Luftblasen in der von der Aufnahmewanne (6) aufgenommenen Flüssigkeit aktiviert ist, die durch einen entgegengesetzten Pumpbetrieb der Vakuum- oder Wasserstrahlpumpe realisiert ist, bevor dann in einer Ableitphase die Flüssigkeit, insbesondere vollständig, aus der Aufnahmewanne (6) abgeleitet ist.

2. Partikelverteilvorrichtung nach Anspruch 1,
**dadurch gekennzeichnet,**
**dass** das Flüssigkeitsreservoir (7) und die Auffangeinheit (9) durch eine identische Baugruppe (14) ausgebildet sind und/oder dass das Flüssigkeitsreservoir (7) und die Auffangeinheit (9) flüssigkeitsleitend miteinander verbunden sind und/oder dass das Flüssigkeitsreservoir (7) der Auffangeinheit (9) entspricht.

3. Partikelverteilvorrichtung nach Anspruch 1 oder 2,
**dadurch gekennzeichnet,**
**dass** die Trägereinheit (4) zum Aufnehmen und Halten von wenigstens zwei, jeweils eine Partikelaufnahmefläche (3) aufweisende Analysefiltermittel (2) ausgebildet ist, wobei im Flutbetriebsmodus die wenigstens zwei Partikelaufnahmeflächen (3) überschwemmbar sind, und wobei die Trägereinheit (4) insbesondere eine runde oder ovale Grundform aufweist und zur Aufnahme von einer eine runde oder ovale Flächenerstreckung aufweisenden Partikelaufnahmefläche (3) der Analysefiltermittel (2) ausgebildet ist.

4. Partikelverteilvorrichtung nach einem der Ansprüche 1 bis 3,
**dadurch gekennzeichnet, dass** die Flutmittel (8) zum Einleiten der Flüssigkeit oder des Kaltreinigers eine, insbesondere um eine Rotationsachse drehbare, Düse (21) zum Ausbilden eines rotierenden Strahls umfassen, um an den Wandmitteln (5) festgesetzte Schmutzpartikel abzuschwemmen, wobei die Flutmittel (8) zum Überschwemmen der Analysefiltermittel (2) zur Abgabe einer Flüssigkeitsmenge von maximal 150ml, bevorzugt maximal 100ml, weiter bevorzugt maximal 50ml ausgebildet sind.

5. Partikelverteilvorrichtung nach einem der Ansprüche 1 bis 4,
**dadurch gekennzeichnet,**
**dass** die Wandmittel (5) und/oder die Trägereinheit (4) aus einem Kunststoffmaterial, insbesondere aus einem Plastomermaterial und/oder transparent ausgebildet sind.

6. Partikelverteilvorrichtung nach einem der Ansprüche 1 bis 5,
**dadurch gekennzeichnet,**
**dass** die Trägereinheit (4) zweiteilig ausgebildet ist, wobei die Analysefiltermittel (2) mit einem ersten Teil der Trägereinheit (4) in die Partikelverteilvorrichtung (1) einführbar ist und/oder dass die Trägereinheit (4) oder der die Analysefiltermittel (2) aufnehmende Flächenabschnitt der Trägereinheit (4) und/oder die Wandmittel (5) eine von den Analysefiltermitteln (2) und/oder den zu analysierenden Schmutzpartikeln abweichende Färbung aufweisen.

7. Partikelverteilvorrichtung nach einem der Ansprüche 1 bis 6,
**dadurch gekennzeichnet,**
**dass** die Flutmittel (8) neben dem Flutbetriebsmodus einen Nachspülbetriebsmodus umfassen, wobei der Nachspülbetriebsmodus so ausgebildet und eingerichtet ist, dass während dem Ableiten der Flüssigkeit aus der Aufnahmewanne (6) mittels der Flüssigkeitsentnahmemittel (11) mit einem Ableitfluidvolumenstrom die Wandmittel (5) durch einen Reinigungsfluidvolumenstrom der Flüssigkeit von auf den Wandmitteln (5) festgesetzten Schmutzpartikeln reinigbar sind, wobei der Reinigungsfluidvolumenstrom kleiner als der Ableitfluidvolumenstrom ist.

8. Partikelverteilvorrichtung nach einem der Ansprüche 1 bis 7,
**dadurch gekennzeichnet,**
**dass** die Partikelverteilvorrichtung (1) Steuermittel (16) umfasst, die zum Ansteuern der Flutmittel (8) und der Flüssigkeitsentnahmemittel (11) ausgebildet sind, derartig, dass nach dem Erfassen eines Benutzerbefehls, insbesondere durch eine am Umgehäuse (12) oder der gemeinsamen Moduleinheit (13) vorgesehene Tast- und/oder Bedieneinheit (17) der Flutbetriebsmodus der Flutmittel (8) zum Überschwemmen der Analysefiltermittel (2) aktivierbar ist und dass nach dem vollständigen Überschwemmen der Analysefiltermittel (2) die Flüssigkeit durch die Flüssigkeitsentnahmemittel (11) wieder aus der Aufnahmewanne (6) ableitbar ist, wobei der Nachspülbetriebsmodus der Flutmittel (8) zum Benässen der Wandmittel (5) aktiviert ist.

9. Partikelverteilvorrichtung nach einem der Ansprüche 1 bis 8,
**dadurch gekennzeichnet,**
**dass** die Partikelverteilvorrichtung (1) einen Luftfilter (22) umfasst, der insbesondere durch ein Gewebematerial ausgebildet ist, damit keine Schmutzpartikel aus der Umgebungs- und/oder Raumluft in das Innere der Partikelverteilvorrichtung (1) gelangen und die Partikelaufnahmefläche (3) verunreinigen.

10. System umfassend eine Partikelverteilvorrichtung (1), die nach einem der Ansprüche 1 bis 9 ausgebildet ist, sowie optische Analyse- und/oder Auswertmittel (10), die zum Erfassen und Auswerten der auf der Partikelaufnahmefläche (3) der Analysefiltermittel (2) angeordneten Schmutzpartikel ausgebildet sind.

## Claims

1. A particle distribution device (1) for disposing dirt particles deposited on analysis filter elements (2), in particular previously filtered out of a fluid volume flow, in an evenly distributed manner, said particle distribution device (1) having a support unit (4) which is realized for accommodating analysis filter elements (2) having an upper particle receiving surface (3) and which serves to accommodate and/or hold the analysis filter elements (2), the particle receiving surface (3) being horizontally aligned,
having wall elements (5) which emerge, in particular monolithically, from the support unit (4), which laterally delimit the particle receiving surface (3) in the accommodated state, which project in a vertical direction (H) running vertically to the particle receiving surface (3) beyond it and which serve to realize a receiving tub (6) for a liquid, in particular water or cold cleaner,
having flooding elements (8) comprising a liquid reservoir (7) which serve to submerge the analysis filter elements (2) at least for a short time by flooding the receiving tub (6) with the liquid in a flooding operating mode in order to float the dirt particles which are, in particular inhomogeneously, distributed on the particle receiving surface (3), and having liquid removal elements (11) comprising a collection unit (9) or draining elements and serving to discharge the liquid dammed up in the receiving tub (6), the liquid flowing through the analysis filter elements (2) to retain the particle receiving surface (3),
the support unit (4), the wall elements (5), the flooding elements (8), the liquid removal elements (11) and the analysis filter elements (2) being disposed in a common surrounding housing (12) or a common module unit (13) in the accommodated state,
the liquid removal elements (11) comprising a vacuum pump (15) or a water jet pump for drawing off the liquid held in the receiving tub (6) in such a manner that the liquid flows through the analysis filter elements (2) during drawing off so that the dirt particles are retained on the particle receiving surface (3),
**characterized in that**
the liquid removal elements (11) have an actuating unit (20), the actuating unit (20) being realized in such a manner that, after the drawing off of the liquid for a short time in an initialization phase, a particle separating phase, which is realized by an opposite pumping operation of the vacuum or water jet pump, is activated for generating air bubbles in the liquid received in the receiving tub (6) before, then, the liquid is, in particular completely, discharged from the receiving tub (6) in a discharging phase.

2. The particle distribution device according to claim 1,
**characterized in that**
the liquid reservoir (7) and the collection unit (9) are realized by an identical assembly (14) and/or **in that** the liquid reservoir (7) and the collection unit (9) are connected to each other so as to conduct the liquid and/or **in that** the liquid reservoir (7) corresponds to the collection unit (9).

3. The particle distribution device according to claim 1 or 2,
**characterized in that**
the support unit (4) is realized to accommodate and hold at least two analysis filter elements (2) each having a particle receiving surface (3), the at least two particle receiving surfaces (3) being submergible in the flooding operating mode and the support unit (4) having in particular a round or oval basic shape and being realized to accommodate a particle receiving surface (3) of the analysis filter elements (2) having a round or oval surface dimension.

4. The particle distribution device according to any one of claims 1 to 3, **characterized in that** the flooding elements (8) for introducing the liquid or the cold cleaner comprise a nozzle (21), which is in particular rotatable about an axis of rotation, for realizing a rotating jet in order to float off dirt particles settled on the wall elements (5), the flooding elements (8) for submerging the analysis filter elements (2) being realized to dispense an amount of liquid of a maximum of 150 ml, preferably a maximum of 100 ml, further preferably a maximum of 50 ml.

5. The particle distribution device according to any one of claims 1 to 4,
**characterized in that**
the wall elements (5) and/or the support unit (4) is/are made of a plastic material, in particular of a plastomer material, and/or transparent.

6. The particle distribution device according to any one of claims 1 to 5,
**characterized in that**
the support unit (4) is realized in two parts, the analysis filter elements (2) being insertable with a first part of the support unit (4) into the particle distribution device (1), and/or **in that** the support unit (4) or the surface portion of the support unit (4) accommodating the analysis elements (2) and/or the wall elements (5) have a coloring deviating from the analysis filter elements (2) and/or the dirt particles to be analyzed.

7. The particle distribution device according to any one of claims 1 to 6,
**characterized in that**
the flooding elements (8) comprise, in addition to the flooding operating mode, a rinsing operating mode, the rinsing operating mode being realized and configured in such a manner that the wall elements (5) are cleanable of dirt particles settled on the wall elements (5) by a cleaning fluid volume flow of the liquid during the discharge of the liquid from the receiving tub (6) by means of the liquid removal elements (11) with a discharging fluid volume flow, the cleaning fluid volume flow being smaller than the discharging fluid volume flow.

8. The particle distribution device according to any one of claims 1 to 7,
**characterized in that**
the particle distribution device (1) comprises control elements (16) which are realized for actuating the flooding elements (8) and the liquid removal elements (11) in such a manner that, after the detection of a user command, in particular by a touch and/or operating unit (17) provided on the surrounding housing (12) or the common module unit (13), the flooding operating mode of the flooding elements (8) for submerging the analysis filter elements (2) is activatable and that, after the complete submersion of the analysis filter elements (2), the liquid is dischargeable again from the receiving tub (6) by the liquid removal elements (11), the rinsing operating mode of the flooding elements (8) being activated for wetting the wall elements (5).

9. The particle distribution device according to any one of claims 1 to 8,
**characterized in that**
the particle distribution device (1) comprises an air filter (22) which is realized in particular by a fabric material so that no dirt particles from the ambient and/or room air enter the interior of the particle distribution device (1) and contaminate the particle receiving surface (3).

10. A system comprising a particle distribution device (1) which is realized according to any one of claims 1 to 9,
and optical analysis and/or evaluation elements (10) which are realized to detect and evaluate the dirt particles disposed on the particle receiving surface (3) of the analysis filter elements (2).

## Revendications

1. Dispositif (1) de répartition de particules pour la disposition uniformément repartie de particules de saleté déposées sur des moyens (2) de filtre d'analyse, notamment filtrées préalablement d'un débit volumétrique de fluide, ledit dispositif (1) de répartition de particules ayant une unité de support (4) qui est réalisée pour loger des moyens (2) de filtre d'analyse ayant une surface (3) supérieure de réception de particules et qui est destinée à loger et/ou retenir les moyens (2) de filtre d'analyse, la surface (3) de réception de particules étant orientée horizontalement,
ayant des moyens de paroi (5) qui émergent, notamment monolithiquement, de l'unité de support (4), qui délimitent latéralement la surface (3) de réception de particules dans l'état logé, qui font saillie dans une direction verticale (H) s'étendant verticalement par rapport à la surface (3) de réception de particules de celle-ci et qui sont destinés à réaliser une cuve de réception (6) pour un liquide, notamment de l'eau ou un nettoyant à froid,
ayant des moyens d'inondation (8) comprenant un réservoir de liquide (7) pour submerger les moyens (2) de filtre d'analyse au moins pour une courte durée en inondant la cuve de réception (6) avec le liquide dans un mode de fonctionnement d'inondation pour faire flotter les particules de saleté réparties, notamment de manière inhomogène, sur la surface (3) de réception de particules, et
ayant des moyens (11) de prélèvement de liquide qui comprennent une unité collectrice (9) ou des moyens d'évacuation et qui sont destinés à évacuer le liquide accumulé dans la cuve de réception (6), le liquide traversant les moyens (2) de filtre d'analyse pour retenir la surface (3) de réception de particules,
l'unité de support (4), les moyens de paroi (5), les moyens d'inondation (8), les moyens (11) de prélèvement de liquide et les moyens (2) de filtre d'analyse étant disposés dans un boîtier enveloppant (12) commun ou une unité de module (13) commune dans l'état logé,
les moyens (11) de prélèvement de liquide comprenant une pompe à vide (15) ou une pompe à jet d'eau pour aspirer le liquide tenu dans la cuve de réception (6) de manière que le liquide traverse les moyens (2) de filtre d'analyse pendant l'aspiration pour retenir les particules de saleté sur la surface (3) de réception de particules,
**caractérisé en ce que**
les moyens (11) de prélèvement de liquide ont une unité d'actionnement (20), l'unité d'actionnement (20) étant réalisée de manière qu'après une aspiration du liquide dans une phase d'initialisation pour une courte durée, une phase de séparation de particules, qui est réalisée par un fonctionnement de pompe opposé de la pompe à vide ou à jet d'eau, est activée pour générer des bulles d'air dans le liquide reçu dans la cuve de réception (6) avant que le liquide soit ensuite évacué, notamment complètement, de la cuve de réception (6) dans une phase d'évacuation.

2. Dispositif (1) de répartition de particules selon la revendication 1,
**caractérisé en ce que**
le réservoir de liquide (7) et l'unité collectrice (9) sont réalisés par un ensemble identique (14) et/ou **en ce que** le réservoir (7) et l'unité collectrice (9) sont reliés l'un à l'autre de manière à conduire le liquide et/ou **en ce que** le réservoir de liquide (7) correspond à l'unité collectrice (9).

3. Dispositif (1) de répartition de particules selon la revendication 1 ou 2,
**caractérisé en ce que**
l'unité de support (4) est réalisée pour loger et retenir au moins deux moyens (2) de filtre d'analyse dont chacun a une surface (3) de réception de particules, les au moins deux surfaces (3) de réception de particules sont capables d'être submergées dans le mode de fonctionnement d'inondation et l'unité de support (4) ayant notamment une forme de base ronde ou ovale et étant réalisée pour loger une surface (3) de réception de particules des moyens (2) de filtre d'analyse ayant une orientation de surface ronde ou ovale.

4. Dispositif (1) de répartition de particules selon l'une quelconque des revendications 1 à 3,
**caractérisé en ce que** les moyens d'inondation (8) pour introduire le liquide ou le nettoyant à froid comprennent une buse (21), qui est notamment rotative autour d'un axe de rotation, pour réaliser un jet rotatif afin d'emporter des particules de saleté déposées sur les moyens de paroi (5), les moyens d'inondation (8) étant réalisés pour submerger les moyens (2) de filtre d'analyse pour distribuer une quantité de liquide de 150 ml maximum, de préférence de 100 ml maximum, plus préférentiellement de 50 ml maximum.

5. Dispositif (1) de répartition de particules selon l'une quelconque des revendications 1 à 4,
**caractérisé en ce que**
les moyens de paroi (5) et/ou l'unité de support (4) sont faits d'un matériau plastique, notamment d'un matériau plastomère, et/ou transparents.

6. Dispositif (1) de répartition de particules selon l'une quelconque des revendications 1 à 5,
**caractérisé en ce que**
l'unité de support (4) est réalisée en deux parties, les moyens (2) de filtre d'analyse étant insérable dans le dispositif (1) de répartition de particules avec une première partie de l'unité de support (4), et/ou **en ce que** l'unité de support (4) ou la section de surface logeant les moyens (2) de filtre d'analyse et/ou les moyens de paroi (5) ont une coloration différente des moyens (2) de filtre d'analyse et/ou des particules de saleté à analyser.

7. Dispositif (1) de répartition de particules selon l'une quelconque des revendications 1 à 6,
**caractérisé en ce que**
les moyens d'inondation (8) comprennent, en plus du mode de fonctionnement d'inondation, un mode de fonctionnement de rinçage, le mode de fonctionnement de rinçage étant réalisé et configuré de manière que les moyens de paroi (5) sont nettoyables de particules de saleté déposées sur les moyens de paroi (5) par un débit volumétrique de fluide de nettoyage du liquide pendant l'évacuation du liquide de la cuve de réception (6) au moyen des moyens (11) de prélèvement de liquide avec un débit volumétrique de fluide d'évacuation, le débit volumétrique de fluide de nettoyage étant inférieur au débit volumétrique de fluide d'évacuation.

8. Dispositif (1) de répartition de particules selon l'une quelconque des revendications 1 à 7,
**caractérisé en ce que**
le dispositif (1) de répartition de particules comprend des moyens de contrôle (16) réalisés pour actionner les moyens d'inondation (8) et les moyens (11) de prélèvement de liquide de manière qu'après la détection d'une commande utilisateur, notamment par une unité (17) tactile et/ou de commande prévu sur le boîtier enveloppant (12) ou l'unité de module (13) commune, le mode de fonctionnement d'inondation des moyens d'inondation (8) pour submerger les moyens (2) de filtre d'analyse est activable et qu'après la submersion complète des moyens (2) de filtre d'analyse, le liquide est capable d'être évacué à nouveau de la cuve de réception (6) par les moyens (11) de prélèvement de liquide, le mode de fonctionnement de rinçage des moyens d'inondation (8) étant activé pour mouiller les moyens de paroi (5).

9. Dispositif (1) de répartition de particules selon l'une quelconque des revendications 1 à 8,
**caractérisé en ce que**
le dispositif (1) de répartition de particules comprend un filtre à air (22) qui est réalisé notamment par un matériau tissulaire pour qu'aucune particule de saleté de l'air de pièce et/ou ambiant ne pénètre à l'intérieur du dispositif (1) de répartition de particules et contamine la surface (3) de réception de particules.

10. Système comprenant un dispositif (1) de répartition de particules réalisé selon l'une quelconque des revendications 1 à 9,
et des moyens optiques d'évaluation et/ou d'analyse (10) réalisés pour détecter et évaluer les particules de saleté disposées sur la surface (3) de réception de particules des moyens (2) de filtre d'analyse.
